# EUROPEAN PATENT APPLICATION

(11) **EP 4 415 468 A1**
(43) Date of publication of application: **14.08.2024**
(21) Application number: 22878851.9
(22) Date of filing: 04.10.2022
(51) Int. Cl.: H04W 74/04, H04W 74/08, H04W 72/04, H04W 84/12

(54) **METHOD AND DEVICE FOR REVERSE TRANSMISSION OF RAPID DATA IN COMMUNICATION SYSTEM**

(30) Priority: 05.10.2021 KR 20210131820
(71) Applicant: Hyundai Motor Company, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR)
(74) Representative: Viering, Jentschura & Partner mbB Patent- und Rechtsanwälte
(86) International application number: PCT/KR2022/014907
(87) International publication number: WO 2023/059030

(57) **Abstract**

Disclosed are a method and device for reverse transmission of rapid data in a communication system. An AP method comprises the steps of: setting up a service section with a STA; transmitting, to the STA, a first data frame containing information indicating that reverse communication is allowed in the service section; receiving, from the STA, a first reception response frame with respect to the first data frame; and performing reverse communication with the STA in a remaining section within the service section.

## Description

### [Technical Field]

The present disclosure relates to a wireless local area network (LAN) communication technique, and more particularly, to a technique for quickly transmitting time-sensitive data in a reverse direction.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

Improvements to the conventional carrier sensing multiple access/collision avoidance (CSMA) scheme may be required for low-latency operations in a wireless LAN. To transmit data based on the CSMA scheme, a communication node may check whether a channel is in an idle state by performing a channel access procedure. When the channel is in the idle state, the communication node may transmit data. That is, the communication node may compete with other communication nodes to transmit data. Since it takes time due to competition, there may be limitations in quickly transmitting data.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for quickly transmitting time-sensitive data in a reverse direction in a communication system.

### [Technical Solution]

A method of an access point (AP), according to a first exemplary embodiment of the present disclosure for achieving the above-described objective, may comprise: configuring a service period with a station (STA); transmitting, to the STA, a first data frame including information indicating that reverse communication is allowed in the service period; receiving a first reception response frame for the first data frame from the STA; and performing the reverse communication with the STA in a remaining period within the service period.

The method may further comprise: when the first data frame includes a first medium access control (MAC) layer protocol data unit (MPDU) and a second MPDU, and the first reception response frame includes an acknowledgment (ACK) for the first MPDU and a negative NACK (NACK) for the second MPDU, performing a retransmission procedure of the second MPDU with the STA in the remaining period.

The first data frame may further include information indicating that the reverse communication is performed preferentially to the retransmission procedure, and in the remaining period, the retransmission procedure may be performed after completion of the reverse communication.

The information indicating that the reverse communication is performed preferentially to the retransmission procedure may be indicated by an access category (AC) constraint/retransmit field included in the first data frame.

The first data frame may further include information indicating that the retransmission procedure is performed preferentially to the reverse communication, and in the remaining period, the reverse communication may be performed after completion of the retransmission procedure.

The first data frame may further include information indicating the remaining period.

The reverse communication may be performed in an adjusted remaining period within the remaining period, and the adjusted remaining period may be 'the remaining period - a time required for the retransmission procedure'.

The reverse communication may be performed in an adjusted remaining period within the remaining period, the adjusted remaining period may be 'the remaining period - (2 × short interframe space (SIFS)) + a time required for the retransmission procedure', and the time required for the retransmission procedure may be `a time required for transmission of the second MPDU + SIFS + a time required for reception of a second response frame for the second MPDU'.

The first reception response frame may include at least one of a block ACK (BA) bitmap, information indicating that the reverse communication is performed preferentially, or information indicating that a second data frame to be transmitted in a reverse direction exists in the STA.

A method of a station (STA), according to a second exemplary embodiment of the present disclosure for achieving the above-described objective, may comprise: configuring a service period with an access point (AP); receiving, from the AP, a first data frame including information indicating that reverse communication is allowed in the service period; transmitting a first reception response frame for the first data frame to the AP; and performing the reverse communication with the AP in a remaining period within the service period.

The method may further comprise: when the first data frame includes a first medium access control (MAC) layer protocol data unit (MPDU) and a second MPDU, and the first reception response frame includes an acknowledgment (ACK) for the first MPDU and a negative NACK (NACK) for the second MPDU, performing a retransmission procedure of the second MPDU with the AP in the remaining period.

The first data frame may further include information indicating that the reverse communication is performed preferentially to the retransmission procedure, and in the remaining period, the retransmission procedure may be performed after completion of the reverse communication.

The information indicating that the reverse communication is performed preferentially to the retransmission procedure may be indicated by an access category (AC) constraint/retransmit field included in the first data frame.

The first data frame may further include information indicating that the retransmission procedure is performed preferentially to the reverse communication, and in the remaining period, the reverse communication may be performed after completion of the retransmission procedure.

The first data frame may further include information indicating the remaining period.

The reverse communication may be performed in an adjusted remaining period within the remaining period, and the adjusted remaining period may be 'the remaining period - a time required for the retransmission procedure'.

The reverse communication may be performed in an adjusted remaining period within the remaining period, the adjusted remaining period may be 'the remaining period - (2 × short interframe space (SIFS)) + a time required for the retransmission procedure', and the time required for the retransmission procedure may be `a time required for transmission of the second MPDU + SIFS + a time required for reception of a second response frame for the second MPDU'.

The first reception response frame may include at least one of a block ACK (BA) bitmap, information indicating that the reverse communication is performed preferentially, or information indicating that a second data frame to be transmitted in a reverse direction exists in the STA.

An access point (AP), according to a third exemplary embodiment of the present disclosure for achieving the above-described objective, may comprise: a processor, and the processor may cause the AP to perform: configuring a service period with a station (STA); transmitting, to the STA, a first data frame including information indicating that reverse communication is allowed in the service period; receiving a first reception response frame for the first data frame from the STA; and performing the reverse communication with the STA in a remaining period within the service period.

The processor may further cause the AP to perform: when the first data frame includes a first medium access control (MAC) layer protocol data unit (MPDU) and a second MPDU, and the first reception response frame includes an acknowledgment (ACK) for the first MPDU and a negative NACK (NACK) for the second MPDU, performing a retransmission procedure of the second MPDU with the STA in the remaining period.

### [Advantageous Effects]

According to the present disclosure, a plurality of transmission periods may be configured and the plurality of transmission periods may be allocated to communication node(s). A communication node may perform communication in an allocated transmission period and may quickly transmit data by performing reverse communication in the remaining time of the allocated transmission period. In other words, the communication node may transmit and receive data without delay using the allocated transmission period. Accordingly, the performance of the communication system can be improved.

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3 is a timing diagram illustrating a first exemplary embodiment of a reverse communication method in a slot-based restricted target wake time (TWT).
FIG. 4 is a timing diagram illustrating a second exemplary embodiment of a reverse communication method in a slot-based restricted TWT.
FIG. 5 is a timing diagram illustrating a third exemplary embodiment of a reverse communication method in a slot-based restricted TWT.
FIG. 6 is a timing diagram illustrating a fourth exemplary embodiment of a reverse communication method in a slot-based restricted TWT.
FIG. 7 is a timing diagram illustrating a fifth exemplary embodiment of a reverse communication method in a slot-based restricted TWT.
FIG. 8 is a timing diagram illustrating a sixth exemplary embodiment of a reverse communication method in a slot-based restricted TWT.
FIG. 9 is a timing diagram illustrating a seventh exemplary embodiment of a reverse communication method in a slot-based restricted TWT.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a `wireless communication network'.

In exemplary embodiments, `configuration of an operation (e.g., transmission operation)' may mean that `configuration information (e.g., information element(s), parameter(s)) for the operation' and/or `information indicating to perform the operation' is signaled. `Configuration of an information element (e.g., parameter)' may mean that the information element is signaled. `Configuration of a resource (e.g., resource region)' may mean that setting information of the resource is signaled.

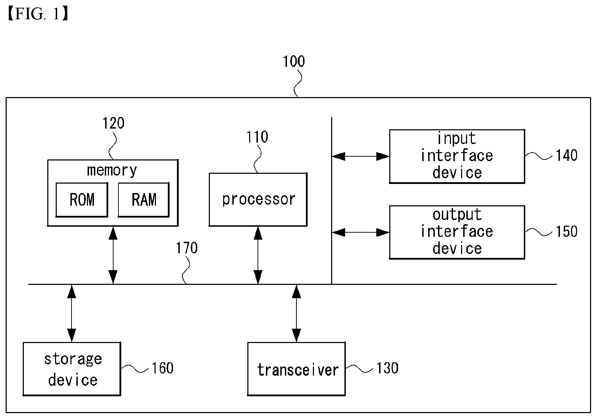

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to `AP', and a station may refer to `STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

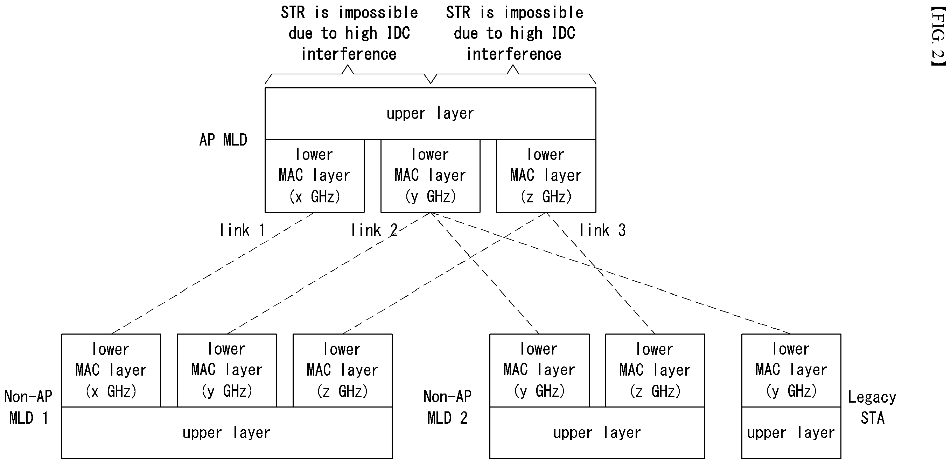

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a `communication node' or `lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a `communication node' or `lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g. a band separation between a link 1 and a link 2 in the frequency domain) is sufficient, the MLD may be able to perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as `NSTR AP MLD' or `NSTR non-AP MLD'.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a station and an access point. A device (e.g. access point, station) that supports multiple links may be referred to as 'multi-link device (MLD)'. An access point supporting multiple links may be referred to as 'AP MLD', and a station supporting multiple links may be referred to as 'non-AP MLD' or 'STA MLD'. The AP MLD may have a physical address (e.g. MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g. MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In this case, the STA MLD may collect information (e.g. status change information) received on the respective links, and control operations performed by the STA1 based on the collected information.

Hereinafter, data transmission and reception methods in a wireless LAN system will be described. Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP. In exemplary embodiments, an operation of a STA may be interpreted as an operation of a STA MLD, an operation of a STA MLD may be interpreted as an operation of a STA, an operation of an AP may be interpreted as an operation of an AP MLD, and an operation of an AP MLD may be interpreted as an operation of an AP. An AP in an AP MLD may refer to an AP affiliated with the AP MLD, and a STA in a STA MLD may refer to a STA affiliated with the STA MLD.

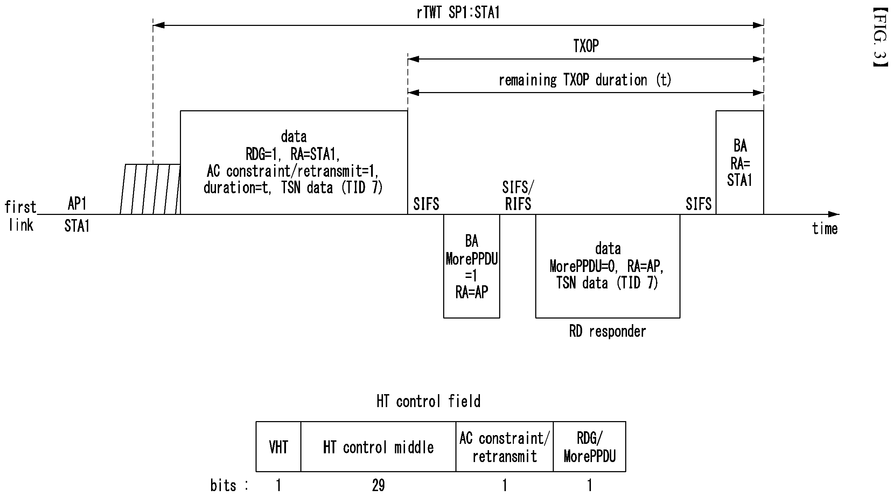

FIG. 3 is a timing diagram illustrating a first exemplary embodiment of a reverse communication method in a slot-based restricted target wake time (TWT).

As shown in FIG. 3, an AP may configure a TWT for communicating with a STA during a specific period (e.g. TWT service period (SP)) by performing a negotiation procedure with the STA. A method of configuring the rTWT (restricted TWT) may be the same as a method of configuring a TWT. In exemplary embodiments, the rTWT SP may be referred to as a service period. Communication of other STA(s) may be restricted in the rTWT SP. For example, only STA(s) belonging to the rTWT SP (e.g. STA(s) with which the rTWT is configured) may perform communication in the rTWT SP. To support the above-described operation, STAs that do not belong to the rTWT SP may terminate communication before the rTWT SP starts and may not perform communication in the rTWT SP. A plurality of STAs may belong to the same rTWT SP, and the plurality of STAs may perform communication in the same rTWT SP. In this case, the rTWT SP may be divided into a plurality of transmission periods (e.g., a plurality of time slots (TSs)), and each of the plurality of transmission periods may be allocated to STA(s). The STA may perform communication using the transmission period allocated to itself in the rTWT SP.

If the AP has data to transmit during an rTWT SP1 to a STA1, which is a STA belonging to the rTWT SP1, the AP may perform a backoff operation to transmit the data. In exemplary embodiments, data may refer to a data unit, a data frame, a medium access control (MAC) layer protocol data unit (MPDU), an aggregated (A)-MPDU, a physical layer protocol data unit (PPDU), or a packet. If the backoff operation succeeds after a start time of the rTWT SP1, the AP may transmit a data frame to the STA1. Transmission of the data frame to the STA1 and reception of a reception response frame for the data frame may be completed within the rTWT SP1. In exemplary embodiments, the reception response frame may be an acknowledgment (ACK) frame or a block ACK (BA) frame.

In the rTWT SP1, during a remaining time after completion of reception of the reception response frame, transmission of another data frame and reception of a reception response frame for the another data frame may be possible. In other words, a time remaining after completion of reception of the reception response frame in the rTWT SP1 may be a sufficient time for a transmission and reception procedure of another data frame. In exemplary embodiments, a transmission and reception procedure of a data frame may mean a transmission and reception procedure of (data frame + reception response frame for the data frame). The AP may allocate the remaining time in the rTWT SP1 to the STA1 for reverse communication (e.g. uplink communication) of the STA1. A method of allocating the remaining time in the rTWT SP1 may be performed as follows.

The AP may obtain an opportunity to transmit a data frame by performing a channel contention operation. The AP may generate a MAC header including a duration field, an access category (AC) constraint/retransmit field, and an RDG/MorePPDU field, and may transmit a data frame including the MAC header. The reverse communication may be allocated (or configured) by the parameters (e.g. duration field, AC constraint/retransmit field, and/or RDG/MorePPDU field) included in the MAC header of the data frame. The duration field may mean a duration parameter, the AC constraint/retransmit field may mean an AC constraint/retransmit parameter, and the RDG/MorePPDU field may mean an RDG/MorePPDU parameter. The AC constraint/retransmit field and RDG/MorePPDU field may be included in a High Throughput (HT) control field.

The duration field may be a parameter indicating the length of a transmission opportunity (TXOP). Within the TXOP, transmission and reception operations of a plurality of data frames and transmission and reception operations of a plurality of reception response frames for the plurality of data frames may be performed. A time available for reverse communication may be calculated by comparing the length indicated by the duration field and a TS allocated to the STA. The above-described calculation may be performed by the AP, STA, and/or MLD. The length indicated by the duration field may indicate a time (e.g. t in FIG. 3) from a time of completing transmission of the data frame to a time of receiving the last reception response frame.

The time of completing transmission of the data frame may be identified based on length information included in a preamble of the data frame. The remaining TXOP (e.g. t) indicated by the duration field and the remaining time (e.g. r) from the transmission completion time of the data frame to an end time of the TS may be compared, and reverse communication may be performed during a shorter time among t and r. If t<=r, the reverse communication may be performed during t. If t>r, the reverse communication may be performed during r. In the exemplary embodiment of FIG. 3, since the STA1 is the only STA allocated to the rTWT SP1, the TS allocated to the STA1 may be the entire period of the rTWT SP1.

Parameters for the reverse communication may be interpreted differently by each of a reverse communication initiator (reverse direction (RD) initiator) and a reverse communication responder (RD responder). The reverse communication initiator may be a TXOP holder, and may obtain a transmission opportunity (e.g. TXOP) by performing a channel contention procedure (e.g. channel access procedure). The reverse communication initiator may transmit a data frame in the TXOP, and may share the remaining period within the TXOP with a receiving communication node (e.g. communication node receiving the data frame). The reverse communication responder may receive the data frame from the reverse communication initiator, and the data frame may include allocation information of a partial period of the TXOP. Accordingly, the reverse communication responder may transmit data frame(s) in the allocated partial period.

The reverse communication initiator may interpret the AC constraint/retransmit parameter as an AC constraint parameter. The reverse communication responder may interpret the AC constraint/retransmit parameter as a retransmit parameter. When the reverse communication initiator sets the reverse direction grant (RDG) parameter to 1 to allow reverse communication, and sets the AC constraint parameter to 0, the reverse communication responder may transmit a data frame having a type that the reverse communication responder wants in the reverse direction, regardless of an AC or traffic identifier (TID) of the data frame having the RDG parameter set by the reverse communication initiator. When the reverse communication initiator sets the RDG parameter to 1 to allow reverse communication, and sets the AC constraint parameter to 1, the reverse communication responder may transmit only a data frame having the same type as the AC or TID of the data frame having the RDG parameter set by the reverse communication initiator.

The rTWT SP may be a period for transmitting time sensitive networking (TSN) data. When the AC constraint parameter is set to 1, only TSN data frames can be transmitted in the reverse direction within the rTWT SP. When the AC constraint parameter is set to 0, all types of data frames not only TSN data can be transmitted in the reverse direction within the rTWT SP. When the type of TSN data transmitted by the AP to the STA is different from the type of TSN data transmitted by the STA to the AP, the above-described TSN data may have different TIDs or different ACs. However, since TSN data is interpreted as satisfying the condition of (AC constraint parameter = 1), the above-described TSN data may be transmitted in the reverse direction.

When there is an error in the TSN data frame transmitted by the reverse communication initiator, the reverse communication initiator may perform a retransmission procedure of the TSN data frame. The reverse communication initiator may allow reverse communication of the reverse communication responder in the remaining period after completion of the retransmission procedure. Alternatively, when there is an error in the TSN data frame transmitted by the reverse communication initiator, the reverse communication of the reverse communication responder (e.g. transmission of a data frame of the reverse communication responder) may be performed first, and the reverse communication initiator may perform a retransmission procedure of the TSN data frame in the remaining period after completion of the reverse communication.

It may be indicated by the AC constraint/retransmit field included in the TSN data frame transmitted by the AP that a retransmission procedure of the TSN data frame is performed before the reverse communication of the STA when an error exists in the TSN data frame transmitted by the AP, which is a reverse communication initiator. The AC constraint/retransmit field set to 0 (i.e. AC constraint parameter = 0) may indicate that transmission of any kind of data is allowed in reverse communication and that reverse communication is performed before the retransmission procedure of the TSN data frame when an error exists in the TSN data frame. That is, the AC constraint/retransmit field set to 0 (i.e. AC constraint parameter = 0) may indicate that the reverse communication is performed preferentially.

The AC constraint/retransmit field set to 1 (i.e. AC constraint parameter = 1) may indicate that only transmission of TSN data is allowed in reverse communication and that a retransmission procedure of the TSN data frame is performed before reverse communication when an error exists in the TSN data frame. The AC constraint/retransmit field set to 1 (i.e. AC constraint parameter = 1) may indicate that the retransmission procedure is performed preferentially. A data frame that can be transmitted in the reverse direction within the rTWT SP may be limited to a TSN data frame. In this case, the AC constraint/retransmit field set by the reverse communication initiator may indicate only that either a retransmission procedure or reverse communication is performed preferentially. That is, the AC constraint/retransmit field may not indicate the type of data that can be transmitted.

If the AC constraint/retransmit field is included in the frame transmitted by the reverse communication responder, the AC constraint/retransmit field may be used as a retransmit parameter. The reverse communication initiator may set an RDG parameter (e.g. RDG/MorePPDU field) included in a MAC header of the data frame to 1 and allow reverse communication by transmitting the corresponding data frame. The reverse communication responder may receive the data frame from the reverse communication initiator, and identify the RDG parameter included in the MAC header of the data frame. The reverse communication responder may determine whether reverse communication is allowed and whether there is an error in the data frame based on the value of the RDG parameter.

If an error exists in the data frame, the retransmission procedure for the data frame of the reverse communication initiator may be performed first, and reverse communication may be performed in the remaining period after completion of the retransmission procedure. Alternatively, if an error exists in the data frame, the reverse communication responder may perform reverse communication (e.g. transmission of a data frame) first, and then the retransmission procedure of the data frame of the reverse communication initiator may be performed in the remaining period after completion of the reverse communication.

If the retransmission procedure is performed first, and reverse communication is performed after completion of the retransmission procedure, the AC constraint/retransmit field may be set to 1 to indicate that the retransmission procedure is performed preferentially. To support the above-described operation, the reverse communication responder may set an AC constraint/retransmit field of a reception response frame (e.g. BA frame) for the data frame received from the reverse communication initiator to 1, and transmit the reception response frame to the reverse communication initiator. The reverse communication responder may wait to receive a retransmitted data frame from the reverse communication initiator without performing reverse communication, after a SIFS or reduced interframe space (RIFS) from a time of transmitting the reception response frame.

If the reverse communication is performed first and the retransmission procedure is performed after completion of the reverse communication, the AC constraint/retransmit field may be set to 0 to indicate that the reverse communication is performed preferentially. To support the above-described operation, the reverse communication responder may set an AC constraint/retransmit field of a reception response frame (e.g. BA frame) for the data frame received from the reverse communication initiator to 0, and transmit the reception response frame to the reverse communication initiator. The reverse communication responder may perform the reverse communication after a SIFS or RIFS from a time of transmitting the reception response frame. The length of a data frame that can be transmitted in the reverse communication may be set so that the retransmission procedure for the data frame of the reverse communication initiator is completed before a TS ends. For example, in the reverse communication, the data frame may be transmitted during `allocated reverse communication period - (time required for receiving the retransmitted data frame + time required for transmitting a reception response frame for the retransmitted data frame)' .

If there is no error in the data frame received from the reverse communication initiator (e.g. retransmission of the data frame is not required), the reverse communication may be performed immediately. Therefore, the AC constraint/retransmit field included in the reception response frame for the data frame may be set to 0. The AC constraint/retransmit field set by the reverse communication initiator may be preferentially used to determine a priority between the retransmission procedure and the reverse communication.

The reverse communication initiator may use the RDG/MorePPDU field as an RDG parameter indicating whether to allow reverse communication. The reverse communication responder may use the RDG/MorePPDU field as a MorePPDU parameter. The MorePPDU parameter set to 0 may indicate that the currently transmitted frame (e.g. PPDU) is the last PPDU. The MorePPDU parameter set to 1 may indicate that there is another PPDU to be transmitted in addition to the currently transmitted frame (e.g. PPDU).

The reverse communication method described above may be performed according to configuration in Table 1 below.

**[Table 1]**

| | **Reverse communication initiator (RD initiator)** | **Reverse communication responder (RD responder)** |
|---|---|---|
| AC constraint/retransmit field = 0 | The RD responder can transmit data having any TID. Reverse communication is performed preferentially. | Reverse communication is performed first, and a retransmission procedure is performed after completion of the reverse communication. |
| AC constraint/retransmit field = 1 | The RD responder can transmit data having the same AC. A retransmission procedure is performed preferentially. | A retransmission procedure is performed first, and reverse communication is performed after completion of the retransmission procedure. |
| RDG/MorePPDU field = 0 | Reverse communication is not allowed. | The currently-transmitted PPDU is the last PPDU. |
| RDG/MorePPDU field = 1 | Reverse communication is allowed. | Another PPDU to be transmitted after the currently-transmitted PPDU exists. |

The reverse communication responder may configure a combination of the AC constraint/retransmit field and the RDG/MorePPDU field depending on whether the data frame received from the reverse communication initiator has an error and whether there is a data frame to be transmitted in the reverse direction. If there is no error in the data frame and there is no data frame to be transmitted in the reverse direction, the reverse communication responder may set the AC constraint/retransmit field to 0, set the RDG/MorePPDU field to 0, and transmit a reception response frame including the AC constraint/retransmit field and the RDG/MorePPDU field to the reverse communication initiator in response to the data frame.

If there is no error in the data frame and there is a data frame to be transmitted in the reverse direction, the reverse communication responder may set the AC constraint/retransmit field to 0, set the RDG/MorePPDU field to 1, and transmit a reception response frame including the AC constrain/retransmit field and the RDG/MorePPDU field to the reverse communication initiator in response to the data frame.

If there is an error in the data frame and there is no data frame to be transmitted in the reverse direction, the reverse communication responder may set the AC constraint/retransmit field to 1, set the RDG/MorePPDU field to 0, and transmit a reception response frame including the AC constrain/retransmit field and the RDG/MorePPDU field to the reverse communication initiator in response to the data frame.

If there is an error in the data frame and there is a data frame to be transmitted in the reverse direction, an operation to be performed preferentially may be selected among the retransmission procedure and reverse communication. For example, the operation to be performed preferentially (e.g. retransmission procedure or reverse communication) may be selected based on the AC constraint/retransmit field included in the data frame of the reverse communication initiator. If the retransmission procedure is performed preferentially, the reverse communication responder may set an AC constraint/retransmit field to 1, set an RDG/MorePPDU field to 1, and transmit a reception response frame including the AC constraint/retransmit field and the RDG/MorePPDU field to the reverse communication initiator in response to the data frame. If the reverse communication is performed preferentially, the reverse communication responder may set an AC constraint/retransmit field to 0, set an RDG/MorePPDU field to 1, and transmit a reception response frame including the AC constraint/retransmit field and the RDG/MorePPDU field to the reverse communication initiator in response to the data frame.

In the exemplary embodiment of FIG. 3, the AP may perform a channel access procedure when there is a TSN data frame to be transmitted to the STA1 within the rTWT SP. When the channel access procedure succeeds, the AP may transmit a TSN data frame to the STA1. If a time required for transmitting the TSN data frame is shorter than the rTWT SP allocated to the STA1, the remaining period within the rTWT SP may be used for reverse communication (e.g. uplink communication) of the STA1. The AP may allow reverse communication to the STA1 by setting an RDG parameter (e.g. RDG/MorePPDU field) of the TSN data frame to 1. The reverse communication may be performed during a shorter time among a duration indicated to the STA1 and the period remaining within the rTWT SP.

In order to limit the type of data that the STA1 can transmit in the reverse communication to TSN data, the AP may set the AC constraint parameter (e.g. AC constraint/retransmit field) to 1, and transmit a TSN data frame including the corresponding AC constraint parameter to the STA1. The STA1 may receive the TSN data frame from the AP, and identify that reverse communication is allowed based on the value of the RDG parameter included in the TSN data frame. For example, the STA1 may identify that reverse communication is possible during a shorter period among the period remaining within the TS and the period remaining within the rTWT SP.

The STA1 may identify whether an error exists in the TSN data frame received from the AP. If there is no error in the AP's TSN data frame, and a TSN data frame to be transmitted in the reverse direction exists in the STA1, the STA1 may set a MorePPDU parameter of a reception response frame (e.g. BA frame) for the TSN data frame to 1, and set a retransmit parameter of the reception response frame to 0. The retransmit parameter set to 0 may indicate that the reverse communication is performed after transmission of the reception response frame. The STA1 may transmit the above-described reception response frame after a SIFS from a time of receiving the TSN data frame.

The STA1 may transmit a TSN data frame to the AP in the reverse direction after a SIFS or RIFS from a time of transmitting the reception response frame. The AP may receive the TSN data frame from the STA1, and may transmit a reception response frame to the STA1 after a SIFS from a time of receiving the TSN data frame. The length of the TSN data frame of the STA1 may be set so that a time of receiving the reception response frame for the TSN data frame transmitted by the STA1 in the reverse direction is located within the rTWT SP or TS.

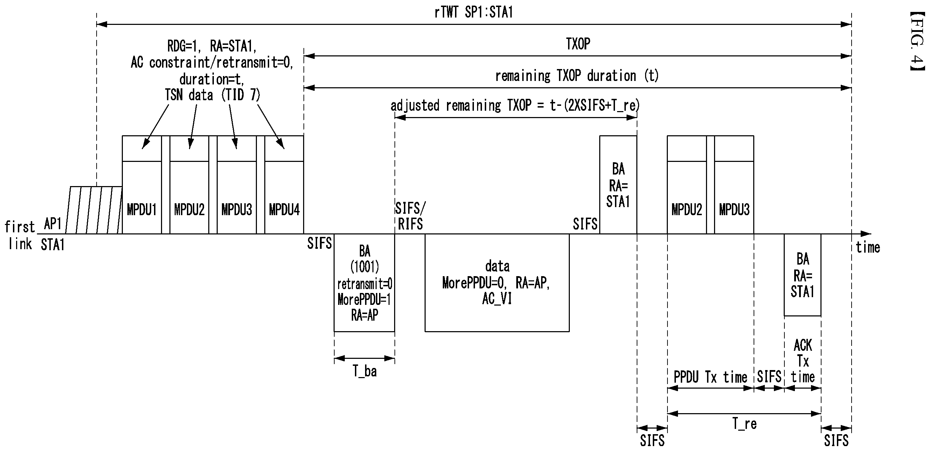

FIG. 4 is a timing diagram illustrating a second exemplary embodiment of a reverse communication method in a slot-based restricted TWT.

As shown in FIG. 4, an AP may be a reverse communication initiator, and a STA1 may be a reverse communication responder. The AP may be an AP affiliated with an AP MLD, and the STA1 may be a STA affiliated with a STA MLD. A data frame transmitted by the AP to the STA1 may be an A-MPDU including a plurality of MPDUs. The A-MPDU may be transmitted within an rTWT SP configured between the AP and the STA1. The AP may set an RDG parameter to 1 to allow a remaining TXOP duration to be used for reverse communication of the STA1, and may transmit a frame (e.g. A-MPDU) including the RDG parameter. The AP may set an AC constraint parameter to 0 to allow reverse communication of the STA1 regardless of the type of data, and may transmit a frame (e.g. A-MPDU) including the AC constraint parameter. If the AC constraint parameter is set to 0 and an error exists in the TSN data frame transmitted by the AP, the AC constraint parameter set to 0 may indicate that a retransmission procedure is performed after performing reverse communication first. The value of the AC constraint/retransmit field may be used to indicate which among the reverse communication and retransmission procedure is performed preferentially.

The STA1 may receive the TSN data frame (e.g. A-MPDU) from the AP, and may identify that errors exist in an MPDU2 and MPDU3 of the A-MPDU. Since the AC constraint parameter set to 0 indicates that reverse communication of the STA1 is performed first regardless of the type of data, the STA1 may transmit a reception response frame (e.g. BA frame) including parameters defined in Table 2 below to the AP.

**[Table 2]**

| | **Content** |
|---|---|
| BA bitmap | 1001 |
| AC constraint/retransmit | 0 |
| RDG/MorePPDU | 1 |
| Receiver address (RA) | AP |

In the BA bitmap, a bit set to 0 may indicate negative ACK (NACK), and a bit set to 1 may indicate ACK. The RDG/MorePPDU field (i.e. MorePPDU parameter) set to 1 may indicate that a PPDU to be transmitted in the reverse direction exists. The AC constraint/retransmit field (i.e. retransmit parameter) set to 0 may indicate that reverse communication is performed preferentially. The STA1 may transmit a data frame in the reverse direction after a SIFS or RIFS from a time of transmitting the reception response frame. When an A-MPDU including the reception response frame and a reverse data frame is transmitted, the STA1 may transmit the reverse data frame along with the reception response frame in form of the A-MPDU without waiting for a SIFS or RIFS. The reverse data frame may refer to a data frame transmitted from the STA1 to the AP or/and a data frame transmitted from the STA1 to the AP in an uplink manner. On the other hand, a forward data frame may refer to a data frame transmitted from the AP to the STA1 or/and a data frame transmitted from the AP to the STA1 in a downlink manner.

A time available for the reverse data transmission procedure of the STA1 (e.g. transmission of the reverse data frame + reception of a reception response frame) may be an adjusted remaining TXOP. The adjusted remaining TXOP may be `(remaining period within the rTWT SP or remaining period within the TS) - time required for the retransmission procedure'. The AP may indicate to the STA1 the remaining TXOP duration t, which is the time available for the reverse communication. Information on the remaining TXOP duration t may be included in an A-MPDU (e.g. data frame). 'time required for retransmission of the data frame + SIFS + time required for reception of a reception response frame' may be defined as T_re. The adjusted remaining TXOP may be (t-(2×SIFS+T_re)). 2×SIFS may be a sum of a SIFS for which the AP waits to retransmit the data frame after transmission of the reception response frame for the reverse data frame and a SIFS required for the AP to transition to the next TS after receiving a reception response frame for the retransmitted data frame.

As another exemplary embodiment of the adjusted remaining TXOP, when the AP transmits the reception response frame and retransmitted data frame for the reverse data frame in an A-MPDU form, the SIFS is not required, and when the last TS of the rTWT SP is allocated to the STA1 or the STA1 is the only STA belonging to the rTWT SP, the SIFS until an end time of the TS is not required. In this case, the adjusted remaining TXOP may be (t-T_re).

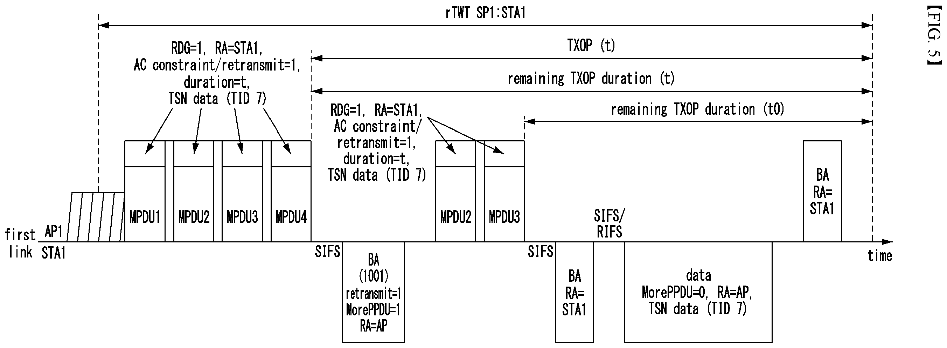

FIG. 5 is a timing diagram illustrating a third exemplary embodiment of a reverse communication method in a slot-based restricted TWT.

As shown in FIG. 5, an AP may be a reverse communication initiator, and a STA1 may be a reverse communication responder. The AP may be an AP affiliated with an AP MLD, and the STA1 may be a STA affiliated with a STA MLD. A data frame transmitted by the AP to the STA1 may be an A-MPDU including a plurality of MPDUs. The AP may set an RDG parameter to 1 to allow a remaining TXOP duration to be used for reverse communication of the STA1, and may transmit a frame (e.g. A-MPDU) including the RDG parameter. The AP may set an AC constraint parameter to 1 to allow only transmission of TSN data in reverse communication of the STA1, and may transmit a frame (e.g. A-MPDU) including the AC constraint parameter. If the AC constraint parameter is set to 1 and an error exists in the TSN data frame transmitted by the AP, the AC constraint parameter set to 1 may indicate that reverse communication is performed after performing a retransmission procedure first.

The STA1 may receive the TSN data frame (e.g. A-MPDU) from the AP, and may identify that errors exist in an MPDU2 and MPDU3 among the A-MPDU. Since the AC constraint parameter set to 1 indicates that only transmission of TSN data is allowed in the reverse communication of the STA1 and that a retransmission procedure is performed preferentially, the STA1 may transmit a reception response frame (e.g. BA frame) including parameters defined in Table 3 below to the AP.

**[Table 3]**

| | **Content** |
|---|---|
| BA bitmap | 1001 |
| AC constraint/retransmit | 1 |
| RDG/MorePPDU | 1 |
| Receiver address (RA) | AP |

In the BA bitmap, a bit set to 0 may indicate NACK, and a bit set to 1 may indicate ACK. The MorePPDU parameter set to 1 may indicate that a PPDU to be transmitted in the reverse direction exists. The retransmission parameter set to 1 may indicate that a retransmission procedure is performed preferentially. The AP may receive the reception response frame from the STA1 and identify that errors occur in the MPDU2 and MPDU3 based on the BA bitmap included in the reception response frame. The AP may generate a data frame (e.g. TSN data frame) including the MPDU2 and MPDU3, and may transmit the data frame to the STA1 after a SIFS or RIFS from a time of receiving the reception response frame. The STA1 may wait for reception of the AP's retransmitted data frame (e.g. TSN data frame) after a SIFS or RIFS from a time of transmitting the reception response frame.

The STA1 may receive the retransmitted data frame from the AP. An error may not exist in the retransmitted data frame. After transmitting a reception response frame for the retransmitted data frame, the STA1 may transmit a reverse data frame in an allocated time period (e.g. remaining TXOP duration t0 - `time required for transmission of the reception response frame for the retransmitted data frame' - 2× SIFS). When a TS allocated to the STA1 is the last TS within the rTWT SP or when the STA1 is the only STA belonging to the rTWT SP, the STA1 may perform the reverse communication in the remaining TXOP duration t0. The type of data that can be transmitted in the reverse communication may be limited to TSN data indicated by the AC constraint parameter set 1. When an error exists in the retransmitted data frame and the AC constraint parameter included in the retransmitted data frame is set to 1, a retransmission procedure for the AP's data frame may be performed in the remaining period.

If a retransmission procedure is not initiated within a PIFS from a time of transmitting the reception response frame for the data frame or the retransmitted data frame received from the AP, the STA1 may retransmit the reception response frame. The STA1 may retransmit the reception response frame after a PIFS, and receive a retransmitted data frame from the AP within an end time of the TS or rTWT SP. If there is not enough time (e.g. remaining time of the TS allocated to STA1, remaining time of the rTWT SP, or remaining TXOP duration) to transmit the reception response frame, the STA1 may not retransmit the reception response frame.

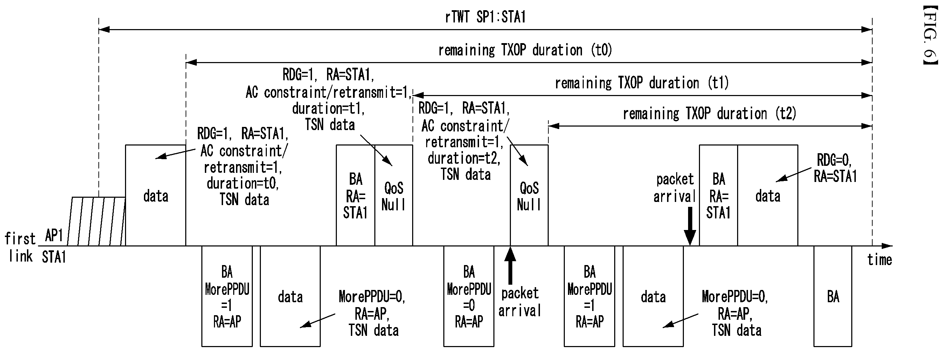

FIG. 6 is a timing diagram illustrating a fourth exemplary embodiment of a reverse communication method in a slot-based restricted TWT.

As shown in FIG. 6, an AP may be a reverse communication initiator, and a STA1 may be a reverse communication responder. The AP may be an AP affiliated with an AP MLD, and the STA1 may be a STA affiliated with a STA MLD. The AP may transmit a data frame (e.g. TSN data frame) including an RDG parameter set to 1 to the STA1. The data frame including the RDG parameter set to 1 may indicate that reverse communication is allowed to the STA1. The STA1 may receive the data frame from the AP, and identify that reverse communication is allowed based on the value of the RDG parameter included in the data frame. If data to be transmitted in the reverse direction exists in the STA1, the STA1 may transmit a reception response frame including a MorePPDU parameter set to 1 to the AP. The STA1 may transmit a reverse data frame to the AP after a SIFS or RIFS from a time of transmitting the reception response frame. If transmission of an A-MPDU including the reception response frame and the reverse data frame is possible, the STA1 may transmit the A-MPDU to the AP without waiting for a SIFS or RIFS.

The AP may receive the reverse data frame from the STA1, and transmit a reception response frame to the STA1 after a SIFS from a time of receiving the reverse data frame. After transmitting the reception response frame, if the AP has additional data to transmit to the STA1 within the TS or rTWT SP, the AP may transmit the additional data to the STA1. After transmitting the reception response frame, if the AP does not have additional data to transmit to the STA1 within the TS or rTWT SP, the AP may transmit a QoS Null frame (or QoS Null data frame) including an RDG parameter set to 1. The QoS Null frame including the RDG parameter set to 1 may indicate that reverse communication for additional data transmission is allowed to the STA1.

The STA1 may receive the QoS Null frame from the AP, and identify that reverse communication is allowed based on the value of the RDG parameter included in the QoS Null frame. If data to be transmitted in the reverse direction does not exist in the STA1, the STA1 may transmit a reception response frame including a MorePPDU parameter set to 0 to the AP. The AP may receive the reception response frame from the STA1, and may identify that data to be transmitted in the reverse direction does not exist in the STA1 based on the value of the MorePPDU parameter included in the reception response frame.

In addition, if transmission of additional data is possible until an end time of the TS or rTWT SP, the AP may transmit a QoS Null frame including an RDG parameter set to 1 to the STA1, indicating that reverse communication is allowed. The STA1 may receive the QoS Null frame from the AP, and identify that reverse communication is allowed based on the value of the RDG parameter included in the QoS Null frame. If data to be transmitted in the reverse direction exists in the STA1, the STA1 may transmit a reception response frame including an MorePPDU parameter set to 1 to the AP. The AP may receive the reception response frame from the STA1, and may identify that data to be transmitted in the reverse direction exists in the STA1 based on the value of the MorePPDU parameter included in the reception response frame. The STA1 may transmit a reverse data frame to the AP after a SIFS or RIFS from a time of transmitting the reception response frame. Alternatively, the STA1 may transmit an A-MPDU including the reception response frame and the reverse data frame to the AP.

The AP may receive the reverse data frame from the STA1 and transmit a reception response frame for the reverse data frame to the STA1. If a data frame to be transmitted to the STA1 occurs before transmission of the reception response frame, the AP may transmit an A-MPDU including the reception response frame and the data frame to the STA1. If a time (e.g., TS or rTWT SP) for reverse communication for transmission of additional data is not enough, an RDG parameter included in the data frame transmitted by the AP may be set to 0. The RDG parameter set to 0 may indicate that reverse communication is not allowed to the STA1.

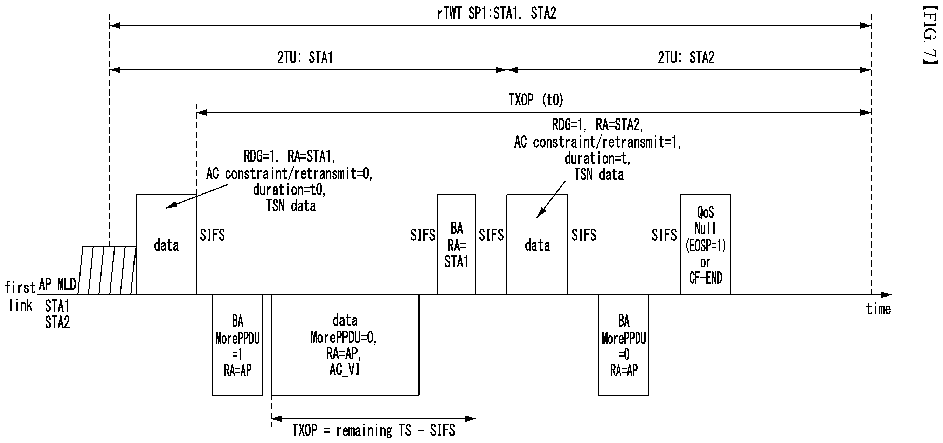

FIG. 7 is a timing diagram illustrating a fifth exemplary embodiment of a reverse communication method in a slot-based restricted TWT.

As shown in FIG. 7, a plurality of STAs (e.g. STA1 and STA2) may be allocated to an rTWT SP, and different TSs within the rTWT SP may be respectively allocated to the plurality of STAs. For example, within the rTWT SP, the first TS may be allocated to the STA1 and the second TS may be allocated to the STA2. The second TS may be the last TS within the rTWT SP. The size of each of the first TS and second TS may be 2 time units (TU). The TU may be symbol(s) or a specific time. The STA2 may identify that the last TS within the rTWT SP is allocated to the STA2 by comparing an end time of a TXOP duration set by the AP with an end time of the second TS. For example, if the end time of the TXOP duration set by the AP is the same as the end time of the second TS allocated to the STA2, the STA2 may determine that the last TS within the rTWT SP is allocated to itself.

The AP may configure reception requirements for data (e.g. TSN data) at the STA by performing an rTWT setup procedure. The reception requirement may be one of the following:
- Reception requirement 1: The STA is required to accurately receive a data frame in the allocated TS. For example, the data frame may be received at a start time of the TS, and transmission of a reception response frame for the data frame may be completed at an end time (or, end time - SIFS) of the TS.
- Reception requirement 2: The STA is able to receive a data frame at any time in the allocated TS.
- Reception requirement 3: The STA is able to receive a data frame before the start time of the allocated TS within the rTWT SP.

When allowing reverse communication to a STA, the AP may deliver reception requirement(s) for the STA allocated to the next TS. The reception requirement(s) may be indicated by a reserved field of an HT control middle field. Here, the size of the reserved field may be 2 bits. Alternatively, a new information field may be added to a frame to indicate the reception requirement(s).

The STA may receive a data frame from the AP and identify that reverse communication is allowed based on a value of an RDG parameter included in the data frame. If the reception requirement 1 is indicated, a time (e.g., TXOP) available for the reverse communication may be `remaining TS - SIFS'. Padding may be added to a reverse data frame and/or a reception response frame so that a transmission and reception procedure of the reverse data frame and the reception response frame is completed at an end time of the TXOP. The padding may be a dummy MPDU, physical dummy signal, QoS Null, and/or redundant bit(s). Alternatively, a delimiter added between MPDUs included in an A-MPDU may be used as padding. Alternatively, no padding may be used in the reverse data frame and/or the reception response frame.

If the reception requirement 2 is indicated, a time (e.g. TXOP) available for the reverse communication may be `remaining TS + a'. Even if the time a is used in the next TS, there may be no effect on transmission of a data frame (e.g., TSN data frame) in the next TS. If the reception requirement 3 is indicated, a time (e.g. TXOP) available for the reverse communication (e.g. TXOP) may within `remaining TS - SIFS'. In this case, there is no problem even if the transmission and reception procedure of the reverse data frame and the reception response frame is completed before the end time of the TXOP.

In the exemplary embodiment of FIG. 7, the AP may indicate the reception requirement 2 to the STA1. In this case, the STA1 may generate reverse data and transmit it to the AP (e.g. AP MLD) so that the transmission and reception procedure of the reverse data frame and the reception response frame is completed before a SIFS from a start time of the next TS (e.g. the second TS). The last TS within the rTWT SP may be allocated to the STA2. The STA2 may receive a data frame from the AP and transmit a reception response frame for the data frame to the AP. If there is no data to transmit in the reverse direction in the STA2, a MorePPDU parameter included in the reception response frame of the STA2 may be set to 0. The AP may receive the reception response frame from the STA2, and may identify that data to be transmitted in the reverse direction does not exist in the STA2 based on the value of the MorePPDU parameter included in the reception response frame. If there is no additional data to transmit in the AP, the AP may early terminate the rTWT SP. For early termination of the rTWT SP, the AP may transmit a QoS Null frame indicating `duration = 0' and 'end of service period (EOSP) = 1'. Alternatively, the AP may early terminate the rTWT SP by transmit a contention-free (CF)-END frame.

On the other hand, the AP may indicate the reception requirement 1 to the STA1 and the reception requirement 3 to the STA2. In the first TS (e.g. TS of the STA1), a data transmission and reception procedure and a reception response frame transmission and reception procedure may be terminated earlier than the end time of the first TS. The AP may transmit a data frame to the STA2 in the first TS before the second TS (e.g. TS of the STA2) starts. Since the reception requirement 3 is indicated to the STA2, the STA2 may receive the data frame in the first TS, and a data frame transmission and reception procedure and a reception response frame transmission and reception procedure between the AP and the STA2 may be performed in the first TS. If there is no additional data to transmit to the AP, the AP may early terminate the rTWT SP early. For early termination of the rTWT SP, the AP may transmit a QoS Null frame indicating `duration = 0' and `EOSP = 1'. Alternatively, the AP may early terminate the rTWT SP by transmitting a CF-END frame. In the above-described process, padding may not be used, and time resources may be used more efficiently.

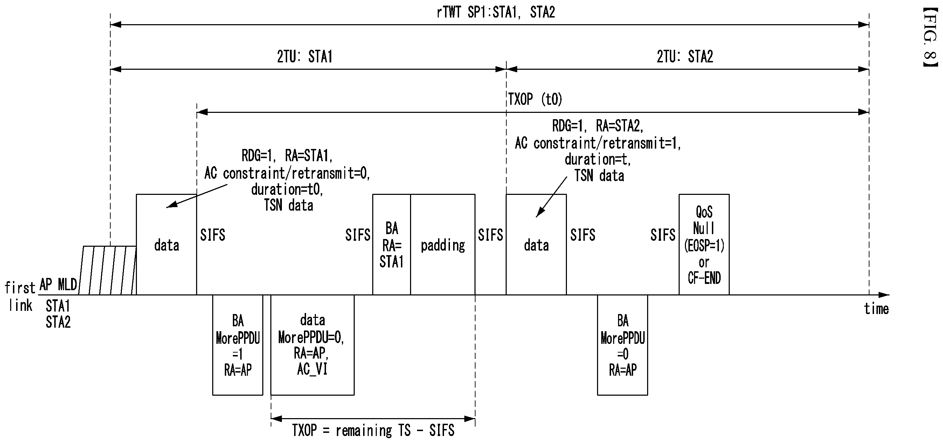

FIG. 8 is a timing diagram illustrating a sixth exemplary embodiment of a reverse communication method in a slot-based restricted TWT.

As shown in FIG. 8, the reception requirement 1 of the exemplary embodiment of FIG. 7 may be indicated to STA(s). The length of a data frame transmitted by the STA1 in the reverse direction may be short. In this case, a transmission and reception procedure of 'the STA1's reverse data frame + reception response frame therefor' may be completed within an end time of the TXOP. In order to match an end time of the transmission and reception procedure of 'the STA1's reverse data frame + reception response frame therefor' with the end time of the TXOP, the AP may transmit the reception response frame including padding to the STA1. Alternatively, the STA1's reverse data frame may include padding.

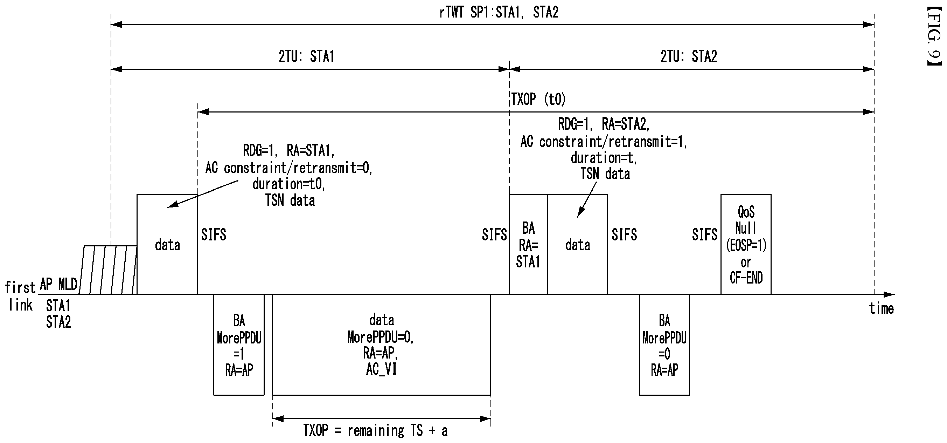

FIG. 9 is a timing diagram illustrating a seventh exemplary embodiment of a reverse communication method in a slot-based restricted TWT.

As shown in FIG. 9, the reception requirement 2 of the exemplary embodiment of FIG. 7 may be indicated to STA(s). The length of a data frame transmitted by the STA1 in the reverse direction may be long. In this case, a TXOP for a transmission and reception procedure of 'the STA1's reverse data frame + reception response frame therefor' may be configured to include a time (e.g. time a) within the next TS (e.g. the second TS). In the next TS, the AP may transmit an A-MPDU including the reception response frame for the STA1 and a data frame for the STA2. Alternatively, in the next TS, the AP may transmit the reception response frame for the STA1 to the STA1, and may transmit the data frame for the STA2 to the STA2 after a SIFS or RIPS from a time of transmitting the reception response frame.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of an access point (AP), comprising:
configuring a service period with a station (STA);
transmitting, to the STA, a first data frame including information indicating that reverse communication is allowed in the service period;
receiving a first reception response frame for the first data frame from the STA; and
performing the reverse communication with the STA in a remaining period within the service period.

2. The method according to claim 1, further comprising: when the first data frame includes a first medium access control (MAC) layer protocol data unit (MPDU) and a second MPDU, and the first reception response frame includes an acknowledgment (ACK) for the first MPDU and a negative NACK (NACK) for the second MPDU, performing a retransmission procedure of the second MPDU with the STA in the remaining period.

3. The method according to claim 2, wherein the first data frame further includes information indicating that the reverse communication is performed preferentially to the retransmission procedure, and in the remaining period, the retransmission procedure is performed after completion of the reverse communication.

4. The method according to claim 3, wherein the information indicating that the reverse communication is performed preferentially to the retransmission procedure is indicated by an access category (AC) constraint/retransmit field included in the first data frame.

5. The method according to claim 2, wherein the first data frame further includes information indicating that the retransmission procedure is performed preferentially to the reverse communication, and in the remaining period, the reverse communication is performed after completion of the retransmission procedure.

6. The method according to claim 2, wherein the first data frame further includes information indicating the remaining period.

7. The method according to claim 2, wherein the reverse communication is performed in an adjusted remaining period within the remaining period, and the adjusted remaining period is 'the remaining period - a time required for the retransmission procedure'.

8. The method according to claim 2, wherein the reverse communication is performed in an adjusted remaining period within the remaining period, the adjusted remaining period is 'the remaining period - (2 × short interframe space (SIFS)) + a time required for the retransmission procedure', and the time required for the retransmission procedure is `a time required for transmission of the second MPDU + SIFS + a time required for reception of a second response frame for the second MPDU'.

9. The method according to claim 1, wherein the first reception response frame includes at least one of a block ACK (BA) bitmap, information indicating that the reverse communication is performed preferentially, or information indicating that a second data frame to be transmitted in a reverse direction exists in the STA.

10. A method of a station (STA), comprising:
configuring a service period with an access point (AP);
receiving, from the AP, a first data frame including information indicating that reverse communication is allowed in the service period;
transmitting a first reception response frame for the first data frame to the AP; and
performing the reverse communication with the AP in a remaining period within the service period.

11. The method according to claim 10, further comprising: when the first data frame includes a first medium access control (MAC) layer protocol data unit (MPDU) and a second MPDU, and the first reception response frame includes an acknowledgment (ACK) for the first MPDU and a negative NACK (NACK) for the second MPDU, performing a retransmission procedure of the second MPDU with the AP in the remaining period.

12. The method according to claim 11, wherein the first data frame further includes information indicating that the reverse communication is performed preferentially to the retransmission procedure, and in the remaining period, the retransmission procedure is performed after completion of the reverse communication.

13. The method according to claim 12, wherein the information indicating that the reverse communication is performed preferentially to the retransmission procedure is indicated by an access category (AC) constraint/retransmit field included in the first data frame.

14. The method according to claim 11, wherein the first data frame further includes information indicating that the retransmission procedure is performed preferentially to the reverse communication, and in the remaining period, the reverse communication is performed after completion of the retransmission procedure.

15. The method according to claim 11, wherein the first data frame further includes information indicating the remaining period.

16. The method according to claim 11, wherein the reverse communication is performed in an adjusted remaining period within the remaining period, and the adjusted remaining period is 'the remaining period - a time required for the retransmission procedure'.

17. The method according to claim 11, wherein the reverse communication is performed in an adjusted remaining period within the remaining period, the adjusted remaining period is 'the remaining period - (2 × short interframe space (SIFS)) + a time required for the retransmission procedure', and the time required for the retransmission procedure is `a time required for transmission of the second MPDU + SIFS + a time required for reception of a second response frame for the second MPDU'.

18. The method according to claim 10, wherein the first reception response frame includes at least one of a block ACK (BA) bitmap, information indicating that the reverse communication is performed preferentially, or information indicating that a second data frame to be transmitted in a reverse direction exists in the STA.

19. An access point (AP), comprising a processor,
wherein the processor causes the AP to perform:
configuring a service period with a station (STA);
transmitting, to the STA, a first data frame including information indicating that reverse communication is allowed in the service period;
receiving a first reception response frame for the first data frame from the STA; and
performing the reverse communication with the STA in a remaining period within the service period.

20. The access point according to claim 19, wherein the processor further causes the AP to perform: when the first data frame includes a first medium access control (MAC) layer protocol data unit (MPDU) and a second MPDU, and the first reception response frame includes an acknowledgment (ACK) for the first MPDU and a negative NACK (NACK) for the second MPDU, performing a retransmission procedure of the second MPDU with the STA in the remaining period.
